# EUROPÄISCHE PATENTSCHRIFT

(11) **EP 1 863 674 B1**
(45) Veröffentlichungstag und Bekanntmachung des Hinweises auf die Patenterteilung: **10.07.2013**
(21) Anmeldenummer: 05797095.6
(22) Anmeldetag: 04.10.2005
(51) Int. Cl.: B60R 13/10

(54) **PLATTE ZUR HERSTELLUNG EINES ELEKTROLUMINESZFÄHIGEN SCHILDES**
PLATE FOR PRODUCING AN ELECTROLUMINESCENT NUMBER PLATE
PLAQUE POUR REALISER UN PANNEAU ELECTROLUMINESCENT

(30) Priorität: 04.10.2004 EP 04023583
(43) Veröffentlichungstag der Anmeldung: 12.12.2007
(73) Patentinhaber: Sauer, Arno Martin, 83471 Berchtesgaden (DE); Moderegger, Bernd, 83471 Berchtesgaden (DE); Sievers, Adolf, 30966 Hemmingen (DE)
(72) Erfinder: Sauer, Arno Martin, 83471 Berchtesgaden (DE); Moderegger, Bernd, 83471 Berchtesgaden (DE); Sievers, Adolf, 30966 Hemmingen (DE)
(74) Vertreter: Wagner, Carsten
(86) Internationale Anmeldenummer: PCT/EP2005/010675
(87) Internationale Veröffentlichungsnummer: WO 2006/037607

(56) Entgegenhaltungen:
- DE-A- 10 160 376
- DE-A- 10 247 708
- DE-A- 19 827 477
- GB-A- 2 340 982
- GB-A- 2 385 457

## Beschreibung

### Fachgebiet der Erfindung

Die vorliegende Erfindung betrifft eine Platte mit einem Beschriftungsbereich und einem Randbereich, der außerhalb des Beschriftungsbereichs vorliegt, zur Herstellung eines elektrolumineszfähigen Schildes. Die Platte ist insbesondere zur Herstellung von Kennzeichen für Kraftfahrzeuge geeignet. Die vorliegende Erfindung betrifft auch ein Verfahren zur Herstellung eines beschrifteten Schildes, insbesondere eines Kennzeichens für Kraftfahrzeuge, sowie ein elektrolumineszierendes Schild, insbesondere Kraftfahrzeugkennzeichen, das nach dem erfindungsgemäßen Verfahren herstellbar ist.

### Stand der Technik der Erfindung

Herkömmliche vom Gesetzgeber vorgeschriebene Kennzeichen für Kraftfahrzeuge leuchten ausschließlich passiv mittels einer retroreflektierenden Folie. Solche Kennzeichenschilder werden herkömmlicherweise aus einer sogenannten Platine hergestellt, die gegebenenfalls eine reflektierende Oberfläche aufweist. In die Platine werden alphanumerische Zeichen eingeprägt, die dem Fahrzeug von der Zulassungsstelle zugeordnet wurden. Die erhaben ausgebildeten alphanumerischen Zeichen werden anschließend mit Farbe überzogen, so dass die Zeichen vor dem Hintergrund sichtbar werden. Zu diesem Zweck wird herkömmlicherweise ein Heißwalzfärbeverfahren eingesetzt bei dem das Schild bei Temperaturen von etwa 200 °C verarbeitet wird. Gegebenenfalls wird auf die fertigen Schilder noch eine transparente Schutzschicht aufgebracht. Herkömmliche Herstellungsverfahren sind daher durch eine hohe mechanische und thermische Beanspruchung der Platine gekennzeichnet.

Weiterhin sind elektrolumineszierende Beschichtungen auf Kraftfahrzeugschildern bekannt, die eine aktive Lichtquelle bilden (EP 1 262 373; DE 201 09 237). Aus der deutschen Offenlegungsschrift DE 198 27 477 A1 ist ein Kennzeichenschild für ein Kraftfahrzeug bekannt, das als aktive Beleuchtung eine zumindest im Bereich der Kennzeichnung angeordnete, elektrisch aktivierbare Leuchtfolienanordnung vorsieht, die die Kennzeichnung und/oder die Schildfläche hinterlegt. Das in dem deutschen Gebrauchsmuster DE 200 22 563 vorgeschlagene Kennzeichenschild entwickelt die Elektrolumineszenz-Folienanordnung weiter. Eine solche Elektrolumineszenz-Folienanordnung lässt jedoch eine herkömmliche Prägung nicht zu. Vielmehr werden die alphanumerischen Zeichen mit Klebebuchstaben aufgebracht.

Die DE 102 47 708 betrifft ein Schild mit einem Elektrolumineszenzaufbau, das verformbar bzw. prägefähig ist. Zu diesem Zweck wird ein elektrisch leitfähiger Grundkörper vorgeschlagen, der eine Beschichtung zur Bildung einer ersten Elektrode aufweist. Auf der ersten Elektrode wird eine weitere Beschichtung mit einer elektrolumineszierenden Pigmentierung aufgebracht, die wiederum zur Bildung einer zweiten Elektrode mit einer elektrisch leitfähigen transparenten Schicht abgedeckt ist. Der Aufbau des aus der DE 102 47 708 bekannten Flachkondensators ist problematisch. Einerseits muß die Schichtstruktur in einem komplizierten Verfahren mehrstufig aufgebracht werden, so dass herkömmliche Platinen nicht verwendet werden können. Außerdem erstrecken sich die Elektroden über den gesamten Beschriftungsbereich, so dass Licht der elektroluminezierenden Beschichtung von der äußeren Elektrodenschicht absorbiert wird und die Elektroden bei der Beschriftung beschädigt werden.

Elektrolumineszenzfolien sind bekannt. Die DE 101 29 021 offenbart die Verwendung einer Elektrolumineszenzfolie in einer Leuchteinrichtung für Fahrzeuge. Beispielsweise soll die Elektrolumineszenzfolie im Innenbereich zur Beleuchtung von Bedienelementen dienen, oder im Außenbereich als Fahrzeugbegrenzungsbeleuchtung, Fahrtrichtungsanzeige, Kennzeichenleuchte, Heckspoiler-Bremslichtbeleuchtung oder Heckspoilernebelschlussbeleuchtung. Zur Herstellung der Leuchteinrichtung wird ein Kunststoff-Spritzgussteil an die Folie angespritzt oder die Folie nachträglich auf das Spritzgussteil angewendet. Bei der Anordnung der Elektrolumineszenzfolie nach dieser Lehre kommt es nicht zu einer mechanischen Beanspruchung der Folie.

Ausgehend von diesem Stand der Technik liegt der Erfindung die Aufgabe zugrunde, eine elektrolumineszenzfähige Platte bereitzustellen mit der Schilder, insbesondere für Kraftfahrzeuge, nach den herkömmlichen Prägeverfahren und Heißwalzfärbeverfahren hergestellt werden können, ohne dass die Elektrolumineszenz der Platte beeinträchtigt wird.

Es ist weiterhin Aufgabe der Erfindung, eine elektrolumineszenzfähige Platte bereitzustellen, mit der Schilder hergestellt werden können, bei der die Elektrolumineszenz nicht nur zur Beleuchtung des Kennzeichens dient, sondern selbst Träger von information ist.

Es ist weiterhin Aufgabe der Erfindung ein Verfahren bereitzustellen mit dem elektrolumineszenzfähige Schilder, insbesondere Fahrzeugkennzeichenschilder, mit herkömmlichen Werkzeugen und Verfahrensweisen hergestellt werden können.

Es ist weiterhin Aufgabe der Erfindung Schilder, insbesondere Fahrzeugkennzeichenschilder, bereitzustellen, die auf einfache Weise und ohne zusätzliche Stromquelle an einem Fahrzeug betrieben werden können.

Diese und weitere Aufgaben werden gemäß der Ansprüche gelöst. Die vorliegende Erfindung stellt eine Platte bereit mit einen Beschriftungsbereich und einem Randbereich, der außerhalb des Beschriftungsbereichs vorliegt, zur Herstellung eines elektrolumineszfähigen Schildes, wobei die Platte gekennzeichnet ist durch
(a) eine Platine, sowie
(b) eine mit einer elektroluminezierenden Beschichtung versehenen Folie, die auf der Platine vorgesehen ist und sich zumindest teilweise über den Beschriftungsbereich und den Randbereich erstreckt, wobei die Folie metallische Leiterbahnen aufweist, die von der Platine elektrisch isoliert sind.

Die vorliegende Erfindung betrifft außerdem ein Verfahren zur Herstellung eines beschrifteten Schildes, das folgende Schritte umfasst:
(a) Bereitstellen einer erfindungsgemäßen elektrolumineszfähigen Platte;
(b) Kaltumformen der Platte im Beschriftungsbereich mit einer Pressvorrichtung unter Ausbildung erhabener Bereiche für das Beschriftungsbild zur Herstellung eines vorgeprägten Schildes.

Schließlich stellt die vorliegende Erfindung auch ein elektrolumineszierendes Schild bereit, das nach dem erfindungsgemäßen Schild herstellbar ist.

Bevorzugte Ausgestaltungen sind Gegenstand der Unteransprüche.

Erfindungsgemäß kann ein KFZ-, LKW- oder Kraftrad-Kennzeichenschild mit einer elektrolumineszierenden Folie so beleuchtet werden, dass die herkömmliche Technik der Kennzeichenschild-Prägung unter Verwendung von Walzen oder ähnlichen Werkzeugen auch unter der erforderlichen Hitzeeinwirkung beim Aufbringen der Buchstaben-Zahlenkombination und des Wasserzeichens (DIN-Normprägung) beibehalten werden kann. Gleichzeitig können sämtliche, Kennzeichen-relevante Merkmale wie die Blaufärbung der EU-Kennzeichen und deren weiße Nationalitätenkennung (D, B, E, I usw.), die Gold- oder Goldgelbfärbung der EU-Sterne, die schmale, weiße Umrandung des Kennzeichen jeweils einzeln und dennoch im Gesamten, in ihrem vorgegebenen, zulassungsfähigen Farbspektrum durch den Anschluss mit dem Bordnetz, mit einem erforderlichen Spannungswandler/Inverter, selbstständig und dauerhaft leuchten.

Die vorliegende Erfindung beruht auf der Erkenntnis, dass für die Zwecke der Herstellung eines elektrolumineszierenden Schildes ein herkömmlicher Flachkondensatoraufbau unvorteilhaft ist. Die vorliegende Erfindung beruht weiterhin auf der Erkenntnis, dass Elektroden, die als Leiterbahnen ausgestaltet sind, derart angeordnet werden können, dass weder eine Zerstörung durch den Prägevorgang noch eine Lichtabsorption bei der Elektrolumineszenz möglich sind und dennoch eine hohe Leuchtwirkung erzielt werden kann. Außerdem wurde gefunden, dass durch Einsatz einer Folie eine aufwändige elektrische Isolierung der Platine entfallen kann.

### Beschreibung der bevorzugten Ausführungsformen

Die erfindungsgemäße Platte umfasst einen Beschriftungsbereich und einen Randbereich. Der Beschriftungsbereich ist derjenige Bereich in dem die Platte bei vorschriftsmäßiger Beschriftung durch ein herkömmliches Prägeverfahren plastisch verformt werden kann. Der Randbereich ist derjenige Bereich in dem die Platte bei vorschriftsmäßiger Beschriftung durch ein herkömmliches Prägeverfahren nicht plastisch verformt werden kann. Der Randbereich liegt entlang der Außenkontur der Platte bis zu einem Abstand von maximal 25 mm. Insbesondere erstreckt sich der Randbereich zwischen Beschriftung und oberem/unteren Rand bis zu einem Abstand von etwa 13 mm.

Die erfindungsgemäße Platte umfasst eine Platine. Die Platine kann ein herkömmliches Aluminiumblech sein, das zur Herstellung von Schildern eingesetzt wird. Die Platine kann aber auch aus jedem anderen zu diesem Zweck geeigneten Material bestehen, solange es den Bedingungen eines herkömmlichen Herstellungsverfahrens standhält. Bevorzugt ist daher, dass die Platine Aluminium umfasst. In einer weiteren Ausführungsform, insbesondere wenn das Kraftfahrzeugschild aufklebbar ausgestaltet ist, kann auch eine Platte aus Kunststoff vorgesehen werden. Vorzugsweise handelt es sich in dann um eine selbstklebende Platte, die nach dem Prägevorgang auf das Kraftfahrzeug aufgeklebt wird.

Die Platte umfasst außerdem eine mit einer elektroluminezierenden Beschichtung versehene Folie, die auf der Platine vorgesehen ist. Die elektroluminezierende Beschichtung kann einen Aufbau aus einer elekrolumineszierenden Schicht, einer elektrisch leitfähigen Schicht auf der Sichtseite sowie einer elektrisch leitfähigen Schicht auf der Rückseite umfassen. Die Beschichtung enthält ein oder mehrere Pigmente, die unter Einwirkung eines elektrischen Wechselspannungsfeldes lumineszieren. Die Lumineszenz tritt dabei nur so lange auf, wie die Anregung durch das Wechselspannungsfeld vorhanden ist. Die elektrolumineszierende Schicht kann durch verschiedene Verfahren, beispielsweise Aufspritzen, Aufstreichen oder Siebdruckverfahren aufgebracht werden. Elektrolumineszenzdruckpasten werden im allgemeinen auf Basis von ZnS, CdS, ZnₓCd₁₋ₓS, Verbindungen der II und VI Gruppe des Periodensystems hergestellt, die üblicherweise mit Cu, Mn, oder Ag, dotiert bzw. aktiviert werden. Übliche Farben sind gelb, grün, blau, rot und weiß. Lumineszenz-Pigmente können mikroverkapselt werden und mit Durchmessern von typischerweise 15 bis 60 µm Siebdruckfarben beigemengt werden.

Erfindungsgemäß werden derartige Elektrolumineszenzpasten mittels Siebdruck oder anderer Beschichtungsverfahren, wie beispielsweise Streichen oder Rollenbeschichten auf transparente Kunststoff-Folien, insbesondere Polyesterfolien, aber auch andere nichthygroskopische Folien, aufgebracht. Eine besonders bevorzugte Folie ist eine Polycarbonatfolie. Es hat sich gezeigt, dass bei Verwendung einer Polycarbonatfolie ein Reißen bzw. ein Aufspleißen der beschichteten Folie während des Prägevorgangs besonders wirksam vermieden werden kann. Gemäß einer weiteren bevorzugten Ausführungsforrm kann die Folie eine mit einer metallischen Beschichtung vorbeschichtete Folie sein. Beispielhaft sei eine silberbeschichtete Polyesterfolie erwähnt, die elektrisch leitfähig ist und als Elektrode dienen kann.

Die elektrolumineszierende Schicht kann mindestens zwei Bereiche aufweisen, die Licht unterschiedlicher Farbe lumineszieren. Auf diese Weise kann die auf einem Kraftfahrzeugschild durch Farbe kodierte Information auch bei schlechten Lichtverhältnissen sicher abgelesen werden. Die Lumineszenz von Licht unterschiedlicher Farbe wird zweckmäßigerweise durch das Aufbringen verschiedener elektrolumineszierender Beschichtungen erreicht.

Die elektrolumineszierende Folie kann weitere Schichten aufweisen, die dem Schutz der elektrolumineszierenden Schicht oder der Leiterbahnen dienen. Diese Beschichtungen können elektrisch isolierend oder elektrisch leitfähig sein. Die Auswahl von zusätzlichen Beschichtungen ist nicht besonders eingeschränkt solange die Wirkungen und Vorteile der vorliegenden Erfindung nicht wesentlich beeinträchtigt werden. Insbesondere kann die Folie weitere elektrisch leitfähige Beschichtungen (beispielsweise herkömmliche ITO-Beschichtungen) umfassen. Es ist bevorzugt, dass die Elektrode auf der Sichtseite eine möglichst hohe Transparenz aufweist, um die Lichtausbeute zu maximieren. Vorzugsweise wird eine Pastenbeschichtung auf ITO-Basis verwendet. Es ist ebenfalls bevorzugt, dass eine Beschichtung als Rückseitenelektrode vorgesehen wird, bei der es sich ebenfalls um eine ITO-Pastenbeschichtung handeln kann.

Die elektrolumineszierende Folie weist vorzugsweise eine Stärke im Bereich von 0, 2 bis 3 mm auf, vorzugsweise im Bereich von 0.5 bis 1.5 mm.

Die vorliegende Erfindung lehrt eine funktionelle Trennung des Beschriftungsbereichs und des Randbereichs im Hinblick auf die Anordnung der Elektroden in Form der Leiterbahnen. Zu diesem Zweck werden die Leiterbahnen vorzugsweise im Randbereich der Platte vorgesehen. Insbesondere erstreckt sich der Randbereich auf der Folie entlang der Außenkontur der Platine bis zu einem Abstand von 25 mm von der Außenkontur. Es ist ebenfalls möglich, wenn auch nicht bevorzugt, dass die Leiterbahnen aus dem Randbereich in den Beschriftungsbereich ragen. Erfindungsgemäß ist bevorzugt, dass die Leiterbahnen auf der gleichen Seite der elektrolumineszierenden Schicht vorliegen. Insbesondere können die Leiterbahnen zwischen der Platine und der elektrolumineszierenden Beschichtung vorliegen. Die Leiterbahnen können ebenfalls mit Hilfe einer Siebdrucktechnik aufgebracht werden. Anschließend wird eine elektrische Isolierung vorgesehen, die die Leiterbahnen abdeckt. Nach der Herstellung der Folie wird diese vorzugsweise auf die Platine aufgeklebt. Daher ist es möglich, eine herkömmliche Platine durch Aufkleben einer erfindungsgemäß ausgestalteten Folie in eine erfindungsgemäße Platte weiterzubilden, die in herkömmlichen Prägeverfahren eingesetzt werden kann.

In einer bevorzugten Ausführungsform sind die Leiterbahnen mit einem elektronischen Bauteil verbunden, das auf der Folie vorgesehen ist. Das Bauteil kann ein gedrucktes Bauteil sein. Vorzugsweise stellen die Leiterbahnen eine gedruckte Verdrahtung dar. In einer besonders bevorzugten Ausführungsform sind die Leiterbahnen und gegebenenfalls das Bauteil im Randbereich vorgesehen. Als elektronisches Bauteil kommt insbesondere ein Inverter in Betracht, der dazu bestimmt ist, ein geeignetes Wechselspannungsfeld bereitzustellen, das über die Leiterbahnen, die als Elektroden wirken, eine Elektrolumineszenz der Folie bewirkt. Ein weiteres Bauteil kann eine Photodiode sein, mit der ein Einschalten der Elektrolumineszenz gesteuert werden kann, wenn dies die äußeren Lichtverhältnisse erfordern. Die Verwendung einer Photodiode erlaubt eine Optimierung der Lebensdauer des Kraftfahrzeugkennzeichens, da die elektrolumineszierende Schicht nur bei Bedarf mit einem elektromagnetischen Wechselfeld beaufschlagt wird.

In einer weiteren bevorzugten Ausführungsform weist die Folie zwei oder mehrere aufgedruckte Chipinverter auf. Auf diese Weise ist es möglich verschiedene Bereiche der elektrolumineszierenden Schicht jeweils mit einem Inverter und den zugeordneten Leiterbahnen zu versorgen. Dies hat den Vorteil, dass die Besonderheiten der unterschiedlichen elektrolumineszierenden Beschichtungen im Hinblick auf die Lichtstärke und die Lebensdauer aufeinander abgestimmt werden können.

Die Leiterbahnen bzw. die gegebenenfalls vorgesehenen aufgedruckten Chipinverter, weisen vorzugsweise Kontaktteile für eine Stromzuführung auf. Die Kontaktteile können vorzugsweise eine Steckverbindung umfassen.

Auf der Folie kann vorzugsweise ein elektronischer Speicher vorgesehen werden, der mit einem externen Gerät beschrieben oder gelesen werden kann. Auf diese Weise können auf dem Schild Informationen gespeichert werden, die herkömmlicherweise auf Prüfplaketten oder Siegeln angeordnet werden. Solche Kennzeichnungen, die ebenfalls vorschriftsgemäß farbig sein müssen, können farbig lumineszierend dargestellt wiedergeben werden und mittels einer IT- Technik, die ebenfalls wie gegebenenfalls der Chipinverter/ Spannungswandler in die farbige elektrolumineszierende Folie eingebracht werden, mittels eines sogenannten Scanners oder Lesegerätes wie es sie schon handelsüblich gibt, ausgelesen, eingelesen und entsprechend dem nächsten Prüfungszeitraumes zur technischen Untersuchung, eingestellt werden. Dieser Vorgang kann beliebig oft wiederholt werden. Das bisher übliche Aufkleben entfällt damit.

Siegel für Bund-Länder, Landkreis, Städte oder andere vorgeschriebene oder gewünschte Siegel können wie zuvor beschrieben ebenfalls vorgesehen werden, so dass auch hier das gewünschte oder vorgeschriebene Farbspektrum leuchtend dargestellt wird. Das bisherige Aufkleben solcher Siegel würde ebenfalls entfallen. Ebenfalls, kann die Datierung zur nächsten Abgassonderuntersuchung vorgesehen werden.

Die Platte hat zur Verwendung für ein Kraftfahrzeug vorzugsweise eine im wesentlichen rechteckige Außenkontur. Insbesondere hat die Platte eine Breite von 10 bis 25 cm. Vorzugsweise erstrecken sich die Leiterbahnen über im wesentlichen die gesamte Länge der Platte, um auf diese Weise ein gleichmäßiges Wechselstromfeld über die gesamte Länge der Platte zu erzielen.

Die erfindungsgemäße Platte kann neben der elektrolumineszierenden Beschichtung und den Leiterbahnen, funktionelle Schichten enthalten. In einer bevorzugten Ausführungsform umfaßt die Folie eine retroreflektierende Schicht. In einer besonderen Ausführungsform werden eine Vielzahl von Glaskörpern, beispielsweise ein geeignetes Glaspulver, in den Schichtenaufbau einverleibt, um der Platte retroreflektierende Eigenschaften zu verleihen. Insbesondere kann dadurch eine silberbeschichtete Polyesterfolie mit retroreflektierenden Eigenschaften versehen werden. Vorteilhaft ist weiterhin eine Beschichtung, die die elektrolumineszierende Schicht vor UV-Strahlung schützt. Weiterhin ist es möglich, eine widerstandsfähige Schicht im Randbereich vorzusehen, die die Leiterbahnen vor mechanischer Einwirkung schützen, wie beispielsweise Steinschlag. In einer alternativen Ausführungsform kann eine spezielle Blende am Rahmen des Schildes vorgesehen werden, der den Randbereich ganz oder zumindest teilweise abdeckt. In einer weiteren Ausführungsform kann eine herkömmliche retroreflektierende Folie auf die erfindungsgemäße Platte geklebt werden, so dass der Platte retroreflektierende Eigenschaften verliehen werden. Entsprechend kann die retroreflektierende Folie bedruckte Bereiche aufweisen, die weitere Informationen der dekorative Elemente darstellen.

Vorzugsweise lumineziert mindestens ein Bereich der elektrolumineszierenden Schicht unter Abstrahlung von weißem Licht, vorzugsweise mit den Koordinaten x= 0,31 bis 0.33 und y=0,34 bis 0,36. Die Helligkeit dieses Bereichs liegt vorzugsweise im Bereich von 10 bis 200 cd/m², vorzugsweise 12 bzw. 20 bis 100 cd/m².

Vorzugsweise umfasst die elektrolumineszierende Schicht verschiedenfarbig lumineszierende Bereiche, die vorgeschriebene farbige Merkmale eines Kennzeichens wiedergeben.

In seiner speziellen Ausführungsform umfasst die erfindungsgemäße Platte eine Platine, sowie eine mit einer elektroluminezierenden Beschichtung versehenen Folie, die auf der Platine vorgesehen ist und sich zumindest teilweise über den Beschriftungsbereich und den Randbereich erstreckt, wobei die Folie metallische Leiterbahnen aufweist, die von der Platine elektrisch isoliert sind. Die mit einer elektroluminezierenden Beschichtung versehenen Folie umfasst eine elektrolumineszierende Schicht, die zwischen zwei elektrisch leitfähigen Elektrodenschichten vorgesehen ist. Die mit einer elektroluminezierenden Beschichtung versehenen Folie wird unter Verwendung einer Klebeschicht auf der Platine vorgesehen. Auf der mit einer elektroluminezierenden Beschichtung versehenen Folie wird ferner eine retroreflektierende Folie vorgesehen, um der Platte retroreflektierende Eigenschaften zu verleihen.

Die erfindungsgemäße Platte kann einfach hergestellt werden durch ein Aufbringen der Folie auf eine herkömmliche Platine. Insbesondere kann die Folie auf die Platine mit einem geeigneten Klebstoff aufgeklebt werden.

Die erfindungsgemäße Platte kann in herkömmlichen Verfahren zur Beschriftung von Platinen eingesetzt werden, bei denen die Platine einer hohen mechanischen oder kurzzeitigen thermischen Beanspruchung ausgesetzt wird. Es hat sich gezeigt, dass bei einer funktionellen Trennung des Beschriftungsbereichs, der im wesentlichen nur die elektrolumineszierende Beschichtung, aber keine Leiterbahnen umfasst, und dem Randbereich, der neben der elektrolumineszierenden Beschichtung die Leiterbahnen zur Bereitstellung eines Wechselstromfeldes umfasst, keine Beeinträchtigung der Elektrolumineszenz auftritt, wenn die erfindungsgemäße Platte in einem Prägeverfahren beschriftet und anschließend in einem Heißfärbeverfahren eingefärbt wird. Es hat sich weiterhin gezeigt, dass bei einer Prägung einer erfindungsgemäßen Platte in einem herkömmlichen Prägeverfahren unter Ausbildung erhabener Bereiche für die Beschriftung die Leuchtkraft der übrigen Bereiche überraschenderweise verstärkt werden kann.

Entsprechend umfaßt das erfindungsgemäße Verfahren folgende Schritte:
(a) Bereitstellen einer erfindungsgemäßen elektrolumineszfähigen Platte;
(b) Kaltumformen der Platte im Beschriftungsbereich mit einer Pressvorrichtung unter Ausbildung erhabener Bereiche für das Beschriftungsbild zur Herstellung eines vorgeprägten Schildes.

Vorzugsweise erfolgt das Kaltumformen durch Tiefzeihen. Das Verfahren umfaßt weiterhin ein Aufbringen einer Folie auf das Schild, wobei das Aufbringen der Folie auf das vorgeprägte Schild bei erhöhter Temperatur mit einer herkömmlichen Heißprägemaschine erfolgt.

Vorzugsweise wird durch die Ausbildung erhabener Bereiche die Leuchtkraft der übrigen Bereiche erhöht.

Die vorliegende Erfindung stellt weiterhin ein elektrolumineszierendes Schild bereit, das nach dem erfindungsgemäßen Verfahren herstellbar ist. Das Schild ist vorzugsweise ein Kraftfahrzeugkennzeichnen.

Das elektrolumineszierende Schild kann in eine herkömmliche Halterung für ein Kennzeichenschild an einem Kraftfahrzeug montiert werden. Die Befestigung kann sowohl durch Verschraubung an mehreren, in der Platte vorgesehenen Punkten geschehen, sodass die selbstleuchtende, farbige und weiße Darstellung des Kennzeichnung erhalten bleibt oder durch das Befestigen durch Einschieben / Einklemmen in einen vorhandenen gebräuchlichen Kennzeichenhalter.

Es ist möglich ein erfindungsgemäßes Schild zu perforieren, um ein Befestigungsmittel, wie eine Schraube, durch den elektrolumineszierenden Bereich zu führen, ohne, dass der Leuchteffekt verloren geht.

Nach der Anordnung des elektrolumineszierenden Schildes an dem Fahrzeug müssen die Leiterbahnen mit einer Stromquelle verbunden werden, die eine Stromversorgung und damit ein Wechselstromfeld bereitstellt. Zu diesem Zweck ist es vorteilhaft, das Schild mit dem Bordnetz des Fahrzeugs zu verbinden. Wahlweise kann der Spannungswandler/Inverter sowohl am Fahrzeug an einem geeigneten Platz vorgesehen werden, als auch mittels Chipinvertertechnik direkt in auf der Folie. Dies kann auch mittels der bisher beim Druck oder der Herstellung von el-Folien üblichen Druck- oder Herstellungstechnik geschehen. Der Spannungswandler/Inverter bewirkt, das sämtliche hier zuvor genannten Merkmale der EU- u. anderer, farbigen elektrolumineszierender Kennzeichen in ihrer spezifischen Farbgebung im einheitlichen Gesamterscheinungsbild der elektrolumineszierenden Kennzeichen durch den Anschluss an das Bord-Stromnetz/Stromkreis leuchtet. Das erfindungsgemäße Schild kann als Fahrzeugkennzeichen für alle PKW, LKW und Krafträder verwendet werden. Entsprechend der abweichenden Betriebsströme der jeweiligen Fahrzeugklassifikationen kann der Inverter angepasst werden. So z. B. PKW 12 Volt, LKW u. Kleintransporter 12-24 Volt und Krafträder je nach Bauart u. Baujahr 6- 9Volt, bzw. auch 12 Volt.

Das Schild kann mit einem handelsüblichen Helligkeitssensor ausgestattet sein, der an der Platine oder der Folie vorgesehen ist, sodass die selbstleuchtende Funktion zur besseren Kenntlichmachung bei Dunkelheit, erst dann eintritt, wenn es die äußeren Einflüsse, wie z. B. Dunkelheit bei Tunneldurchfahrten, Eintritt der tagesbedingten Dunkelheit erfordern.

Die Erfindung wird jetzt anhand der Zeichnung beschrieben.

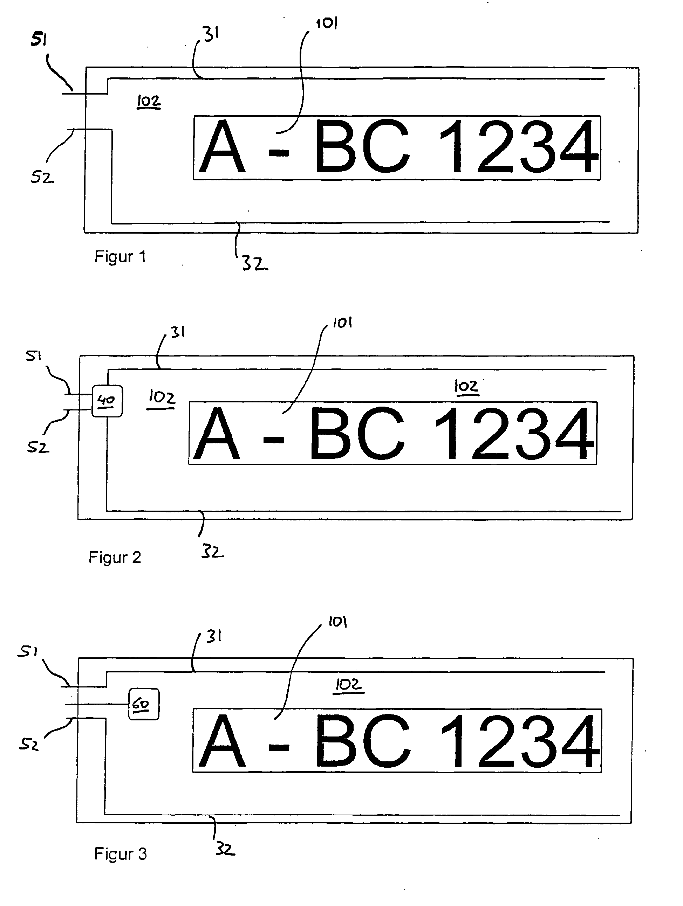

Figur 1 zeigt eine schematische Draufsicht auf ein erfindungsgemäßes Platte 1 mit einem Beschriftungsbereich 101 und einem Randbereich 102, der außerhalb des Beschriftungsbereichs vorliegt. Die Platine weist eine mit einer elektroluminezierenden Beschichtung versehenen Folie auf. Die Folie erstreckt sich über den gesamten Beschriftungsbereich und den Randbereich. Die Folie weist metallische Leiterbahnen 31, 32 auf, die von der Platine elektrisch isoliert sind. Ferner sind Kontaktteile 51, 52 vorgesehen, mit denen die Leiterbahnen an das Bordnetz des Kraftfahrzeugs angeschlossen werden können.

Figur 2 zeigt eine schematische Draufsicht auf ein weitere erfindungsgemäße Platte 1 mit einem Beschriftungsbereich 101 und einem Randbereich 102. Die Folie weist metallische Leiterbahnen 31, 32 auf, die von der Platine elektrisch isoliert sind und mit einem Inverter 40 verbunden sind, der auf der Folie aufgedruckt vorliegt. Der Inverter 40 wird über Kontaktteile 51, 52 durch das Bordnetz mit Strom versorgt.

Figur 3 zeigt eine schematische Draufsicht auf eine weitere erfindungsgemäße Platte 1 mit einem Beschriftungsbereich 101 und einem Randbereich 102. Im Unterschied zu der in Figur 1 gezeigten Ausführungsform weist die Platte ein elektronisches Bauteil 60 auf mit dem die Umgebungshelligkeit gemessen und die Elektrolumineszenz gesteuert werden kann.

## Patentansprüche

1. Platte mit einem Beschriftungsbereich und einem Randbereich, der außerhalb des Beschriftungsbereichs vorliegt, zur Herstellung eines elektrolumineszfähigen Schildes, wobei die Platte **gekennzeichnet ist durch**
(a) eine Platine, sowie
(b) eine mit einer elektroluminezierenden Beschichtung versehenen Folie, die auf der Platine vorgesehen ist und sich zumindest teilweise über den Beschriftungsbereich und den Randbereich erstreckt, wobei die Folie metallische Leiterbahnen aufweist, die von der Platine elektrisch isoliert sind.

2. Platte nach Anspruch 1, **dadurch gekennzeichnet, dass** die elektrolumineszierende Schicht mindestens zwei Bereiche aufweist, die Licht unterschiedlicher Farbe lumineszieren.

3. Platte nach Anspruch 1 oder 2, **dadurch gekennzeichnet, dass** die Leiterbahnen auf der gleichen Seite der elektrolumineszierenden Schicht vorliegen.

4. Platte nach einem der vorstehenden Ansprüche, **dadurch gekennzeichnet, dass** die Leiterbahnen mit einem elektronischen Bauteil verbunden sind, der auf der Folie vorgesehen ist.

5. Platte nach Anspruch 4, **dadurch gekennzeichnet, dass** das Bauteil ein gedrucktes Bauteil ist.

6. Platte nach einem der vorstehenden Ansprüche, **dadurch gekennzeichnet, dass** die Leiterbahnen eine gedruckte Verdrahtung darstellen.

7. Platte nach einem der vorstehenden Ansprüche, **dadurch gekennzeichnet, dass** die Leiterbahnen und gegebenenfalls das Bauteil im Randbereich vorgesehen sind.

8. Platte nach einem der vorstehenden Ansprüche, **dadurch gekennzeichnet, dass** die Leiterbahnen in einem Randbereich vorliegen, der sich auf der Folie entlang der Außenkontur der Platine bis zu einem Abstand von 25 mm von der Außenkontur erstreckt.

9. Platte nach einem der vorstehenden Ansprüche zur Herstellung eines Kraftfahrzeugkennzeichens.

10. Platte nach einem der vorstehenden Ansprüche, **dadurch gekennzeichnet, dass** die Platine Aluminium umfasst.

11. Platte nach einem der vorstehenden Ansprüche, **dadurch gekennzeichnet, dass** die Platte eine im wesentlichen rechteckige Außenkontur hat.

12. Platte nach Anspruch 11, **dadurch gekennzeichnet, dass** die Platte eine Breite von 10 bis 25 cm aufweist.

13. Platte nach Anspruch 12, **dadurch gekennzeichnet, dass** sich die Leiterbahnen über im wesentlichen die gesamte Länge der Platte erstrecken.

14. Platte nach einem der vorstehenden Ansprüche, **dadurch gekennzeichnet, dass** die Leiterbahnen Kontaktteile für eine Stromzuführung umfassen.

15. Platte nach Anspruch 14, **dadurch gekennzeichnet, dass** das Kontaktteile eine Steckverbindung umfassen.

16. Platte nach einem der vorstehenden Ansprüche, **dadurch gekennzeichnet, dass** die Folie eine retroreflektierende Schicht aufweist.

17. Platte nach einem der vorstehenden Ansprüche, **dadurch gekennzeichnet, dass** die Folie auf die Platine aufgeklebt ist.

18. Platte nach einem der vorstehenden Ansprüche, **dadurch gekennzeichnet, dass** mindestens ein Bereich der elektrolumineszierenden Schicht unter Abstrahlung von weißem Licht lumineziert.

19. Platte nach Anspruch 18, **dadurch gekennzeichnet, dass** die elektrolumineszierende Schicht verschiedenfarbig lumineszierende Bereiche umfaßt, die vorgeschriebene farbige Merkmale eines Kennzeichens wiedergeben.

20. Platte nach einem der Ansprüche 13 bis 19, **dadurch gekennzeichnet, dass** die Folie einen elektronischen Speicher umfasst, der mit einem externen Gerät beschrieben oder gelesen werden kann.

21. Verfahren zur Herstellung eines beschrifteten Schildes, das folgende Schritte umfasst:
(a) Bereitstellen einer elektrolumineszfähigen Platte nach einem der vorstehenden Ansprüche;
(b) Kaltumformen der Platte im Beschriftungsbereich mit einer Pressvorrichtung unter Ausbildung erhabener Bereiche für das Beschriftungsbild zur Herstellung eines vorgeprägten Schildes.

22. Verfahren nach Anspruch 21, wobei das Kaltumformen durch Tiefzeihen erfolgt.

23. Verfahren nach Anspruch 21 oder 22, **dadurch gekennzeichnet, dass** das Verfahren weiterhin ein Aufbringen einer Folie auf das Schild umfasst.

24. Verfahren nach Anspruch 23, **dadurch gekennzeichnet, dass** das Aufbringen der Folie auf das vorgeprägte Schild bei erhöhter Temperatur mit einer herkömmlichen Heißprägemaschine erfolgt.

25. Elektrolumineszierendes Schild, herstellbar nach dem Verfahren von Anspruch 21 bis 24.

26. Schild nach Anspruch 25, das ein Kraftfahrzeugkennzeichnen ist.

27. Platte nach einem der Ansprüche 1 bis 20, **dadurch gekennzeichnet, dass** die mit einer elektroluminezierenden Beschichtung versehene Folie mindestens zwei Chipinverter umfasst.

28. Platte nach Anspruch 27, **dadurch gekennzeichnet, dass** die Chipinverter aufgedruckt sind.

29. Verfahren nach einem der Ansprüche 21 bis 24, wobei durch die Ausbildung erhabener Bereiche die Leuchtkraft der übrigen Bereiche erhöht wird.

## Claims

1. Plate with an inscription area and a border area which lies outside of the inscription area, for production of an electroluminescent sign, wherein the plate is **characterized by**
(a) a board, and
(b) a film which is provided with an electroluminescent coating, said film being provided on the board and extended at least partly over the inscription area and the border area, wherein the film comprises metallic conductor tracks which are electrically insulated from the board.

2. Plate according to claim 1, **characterized in that** the electroluminescent coat comprises at least two areas which luminesce light of different colours.

3. Plate according to claim 1 or 2, **characterized in that** the conductor tracks lie on the same side of the electroluminescent coat.

4. Plate according to any of the previous claims, **characterized in that** the conductor tracks are combined with an electronic component which is provided on the film.

5. Plate according to claim 4, **characterized in that** the component is a printed component.

6. Plate according to any of the previous claims, **characterized in that** the conductor tracks represent a printed circuit.

7. Plate according to any of the previous claims, **characterized in that** the conductor tracks and, as the case may be, the component, are provided in the border area.

8. Plate according to any of the previous claims, **characterized in that** the conductor tracks lie in a border area, which extends on the film along the outer contour of the board up to a distance of 25 mm from the outer contour.

9. Plate according to any of the previous claims for production of an automobile number plate.

10. Plate according to any of the previous claims, **characterized in that** the board comprises aluminium.

11. Plate according to any of the previous claims, **characterized in that** the plate has an essentially right-angled outer contour.

12. Plate according to claim 11, **characterized in that** the plate has a breadth of 10 to 25 cm.

13. Plate according to claim 12, **characterized in that** the conductor tracks extend over essentially over the entire length of the plate.

14. Plate according to any of the previous claims, **characterized in that** the conductor tracks comprise contact parts for an electrical supply.

15. Plate according to claim 14, **characterized in that** the contact parts comprise a plug connection.

16. Plate according to any of the previous claims, **characterized in that** the film has a retro-reflective coat.

17. Plate according to any of the previous claims, **characterized in that** the film is bonded to the board.

18. Plate according to any of the previous claims, **characterized in that** at least one area of the electroluminescent coat luminesces under radiation of white light.

19. Plate according to claim 18, **characterized in that** the electroluminescent layer comprises differently coloured luminescent areas which reproduce the prescribed coloured features of a number plate.

20. Plate according to any of claims 13 to 19, **characterized in that** the film comprises an electronic memory, which can be written or read with an external device.

21. Process for the production of an inscribed sign, which comprises the following steps:
(a) provision of an electroluminescent plate according to any of the previous claims;
(b) cold-forming the plate in the inscription area with a press-apparatus under formation of embossed areas for the inscription image for production of a pre-embossed sign.

22. Process according to claim 21, wherein the cold-forming is carried out by deep-drawing.

23. Process according to claim 21 or 22, **characterized in that** the process further comprises the application of a film onto the sign.

24. Process according to claim 23, **characterized in that** the application of the film on the pre-embossed sign takes place at increased temperature with a conventional hot-embossing machine.

25. Electroluminescent sign producible according to the process of claim 21 to 24.

26. Sign according to claim 25 which is an automobile number plate.

27. Plate according to any of claims 1 to 20, **characterized in that** the film provided with an electroluminescent coating comprises at least two chip inverters.

28. Plate according to claim 27, **characterized in that** the chip inverters are imprinted.

29. Process according to any of claims 21 to 24, wherein, through the formation of embossed areas, the luminosity of the remaining areas is increased.

## Revendications

1. Plaque avec une zone d'inscription et une zone de bordure située à l'extérieur de celle-ci, pour la fabrication d'un panneau électroluminescent, la plaque étant **caractérisée par**
(a) une platine et
(b) un film qui est pourvu d'un revêtement électroluminescent, qui est prévu sur la platine et qui s'étend au moins en partie sur la zone d'inscription et sur la zone de bordure, le film présentant des pistes conductrices en métal qui sont isolées électriquement de la platine.

2. Plaque selon la revendication 1, **caractérisée en ce que** la couche électroluminescente présente au moins deux zones qui émettent une lumière de différentes couleurs.

3. Plaque selon la revendication 1 ou 2, **caractérisée en ce que** les pistes conductrices se trouvent sur un même côté de la couche électroluminescente.

4. Plaque selon l'une des revendications précédentes, **caractérisée en ce que** les pistes conductrices sont reliées à un composant électronique qui est prévu sur le film.

5. Plaque selon la revendication 4, **caractérisée en ce que** le composant est un composant imprimé.

6. Plaque selon l'une des revendications précédentes, **caractérisée en ce que** les pistes conductrices représentent un câblage imprimé.

7. Plaque selon l'une des revendications précédentes, **caractérisée en ce que** les pistes conductrices et éventuellement le composant sont prévus dans la zone de bordure.

8. Plaque selon l'une des revendications précédentes, **caractérisée en ce que** les pistes conductrices sont situées dans une zone de bordure qui s'étend sur le film le long du contour extérieur de la platine jusqu'à une distance de 25 mm dudit contour extérieur.

9. Plaque selon l'une des revendications précédentes pour la fabrication d'une plaque d'immatriculation de véhicule.

10. Plaque selon l'une des revendications précédentes, **caractérisée en ce que** la platine comprend de l'aluminium.

11. Plaque selon l'une des revendications précédentes, **caractérisée en ce que** la platine a un contour extérieur globalement rectangulaire.

12. Plaque selon la revendication 11, **caractérisée en ce qu'**elle a une largeur de 10 à 25 cm.

13. Plaque selon la revendication 12, **caractérisée en ce que** les pistes conductrices s'étendent globalement sur toute la longueur de la plaque.

14. Plaque selon l'une des revendications précédentes, **caractérisée en ce que** les pistes conductrices comprennent des éléments de contact pour une amenée de courant.

15. Plaque selon la revendication 14, **caractérisée en ce que** les éléments de contact comprennent une connexion enfichable.

16. Plaque selon l'une des revendications précédentes, **caractérisée en ce que** le film présente une couche rétroréfléchissante.

17. Plaque selon l'une des revendications précédentes, **caractérisée en ce que** le film est collé sur la platine.

18. Plaque selon l'une des revendications précédentes, **caractérisée en ce qu'**au moins une zone de la couche électroluminescente est luminescente lors de l'émission de lumière blanche.

19. Plaque selon la revendication 18, **caractérisée en ce que** la couche électroluminescente comprend des zones émettant de la lumière de différentes couleurs, qui reproduisent des caractéristiques de couleur prescrites d'une plaque d'immatriculation.

20. Plaque selon l'une des revendications 13 à 19, **caractérisée en ce que** le film comprend une mémoire électronique qui est inscriptible ou lisible avec un appareil externe.

21. Procédé pour fabriquer une plaque écrite, qui comprend les étapes suivantes :
(a) préparation d'une plaque électroluminescente selon l'une des revendications précédentes ;
(b) formage à froid de la plaque dans la zone d'inscription à l'aide d'un dispositif de pression, avec formation de zones en relief pour l'image inscrite en vue de fabriquer un panneau pré-estampé.

22. Procédé selon la revendication 21, selon lequel le formage à froid se fait par emboutissage.

23. Procédé selon la revendication 21 ou 22, **caractérisé en ce qu'**il comprend par ailleurs l'application d'un film sur le panneau.

24. Procédé selon la revendication 23, **caractérisé en ce que** l'application du film sur le panneau pré-estampé se fait à une température plus élevée, avec une machine d'estampage à chaud classique.

25. Panneau électroluminescent apte à être fabriqué suivant le procédé selon les revendications 21 à 24.

26. Panneau selon la revendication 25 qui consiste en une plaque d'immatriculation d'automobile.

27. Plaque selon l'une des revendications 1 à 20, **caractérisée en ce que** le film pourvu d'un revêtement électroluminescent comprend au moins deux convertisseurs à puce.

28. Plaque selon la revendication 27, **caractérisée en ce que** les convertisseurs à puce sont posés par impression.

29. Procédé selon l'une des revendications 21 à 24, selon lequel la formation de zones en relief accroît la puissance lumineuse des autres zones.
